# EUROPÄISCHE PATENTSCHRIFT

(11) **EP 0 717 008 B1**
(45) Veröffentlichungstag und Bekanntmachung des Hinweises auf die Patenterteilung: **07.07.1999**
(21) Anmeldenummer: 95117487.9
(22) Anmeldetag: 07.11.1995
(51) Int. Cl.: C01G 25/02, C01B 13/22

(54) **Zirkondioxidpulver, Verfahren zu seiner Herstellung und Verwendung**
Zirconium dioxide powder, process for its preparation and use
Poudre de dioxyde de zirconium, procédé pour sa préparation et son utilisation

(30) Priorität: 17.12.1994 DE 4445205
(43) Veröffentlichungstag der Anmeldung: 19.06.1996
(73) Patentinhaber: Degussa-Hüls Aktiengesellschaft, 45764 Marl (DE)
(72) Erfinder: Mangold, Helmut, Dr., D-63517 Rodenbach (DE); Hartmann, Werner, Dr., D-64832 Babenhausen (DE); Kerner, Dieter, Dr., D-63450 Hanau (DE); Kleinschmit, Peter, Prof., D-63457 Hanau (DE)

(56) Entgegenhaltungen:
- EP-A- 0 241 647
- DE-A- 2 153 671
- DE-A- 4 214 719

## Beschreibung

Die Erfindung betrifft ein Zirkondioxidpulver, das Verfahren zu seiner Herstellung und Verwendung.

Zirkondioxidpulver kann in den unterschiedlichsten Bereichen, wie zum Beispiel Elektronik, keramische Bauteile, Feuerfestmaterialien, Katalyse, eingesetzt werden.

Es ist bekannt, Zirkondioxidpulver auf flammenhydrolytischem Wege herzustellen (DE 36 11 449). Das bekannte Zirkondioxidpulver weist eine Oberfläche von 104 m²/g sowie einen Chloridgehalt von 2.66 Gew.-% auf.

Das bekannte Zirkondioxidpulver hat den Nachteil, daß es während der Herstellung zu Anbackungen im Flammrohr (Reaktionsraum) neigt und daher unerwünschte Betriebsunterbrechungen verursacht.

Es bestand somit die Aufgabe, ein Zirkondioxidpulver, welches diese Nachteile nicht aufweist, herzustellen.

Gegenstand der Erfindung ist ein pyrogen, insbesondere flammenhydrolytisch hergestelltes Zirkondioxidpulver, welches dadurch gekennzeichnet ist, daß die spezifische Oberfläche der Zirkondioxide zwischen 20 und 200 m²/g liegt, die Primärteilchen, die gegebenenfalls miteinander verwachsen sind, zwischen 7 und 100 nm groß sind, die Stampfdichte der entsäuerten und nicht entsäuerten Zirkondioxide zwischen 40 und 150 g/l liegt, die Searszahlen bestimmt nach der an der Beschreibung angegebenen Methode der entsäuerten und der nicht entsäuerten Zirkondioxide zwischen 1 und 20 ml/2g liegt, und der Chlorgehalt der entsäuerten Zirkondioxide kleiner 0,6 Gew.-% ist.

Insbesondere kann das erfindungsgemäße Zirkondioxidpulver die folgenden physikalisch-chemischen Kenndaten aufweisen:

| | |
|---|---|
| ZrO₂ [Gew.-%] | 96 - 100 |
| HfO₂ [Gew.-%] | 4 - 0 |
| Chlorgehalt unentsäuert [Gew.-%] | 2 - 4 |
| Chlorgehalt entsäuert [Gew.-%] | < 0,6 |
| Spezifische Oberfläche [m²/g] | 20 - 200 |
| Primärteilchengröße [nm] | 7 - 80 |
| Stampfdichte des entsäuerten und nicht entsäuerten Zirkondioxides [g/l] | 40 - 150 |
| Kristallphase des unentsäuerten Zirkondioxides | tetragonal und kubisch geringer Anteil monoklin |
| Kristallphase des entsäuerten Zirkondioxides | monoklin und tetragonal |
| Searszahl des entsäuerten und des 1 - 20 nicht entsäuerten Zirkondioxides [ml/2g] | |

Ein weiterer Gegenstand der Erfindung ist ein Verfahren zur Herstellung des pyrogen, insbesondere flammenhydrolytisch hergestellten Zirkondioxidpulvers, welches dadurch gekennzeichnet ist, daß man Zirkonhalogenide, vorzugsweise das Chlorid, verdampft, den Dampf allein oder zusammen mit einem Traggas, zum Beispiel Stickstoff, in einer Mischeinheit in einem Brenner mit Luft, Sauerstoff, Stickstoff und Wasserstoff mischt, die Gase in einer geschlossenen Brennerkammer in einer Flamme miteinander zur Reaktion bringt, anschließend die heißen Abgase und das Zirkondioxid in einer Wärmetauschereinheit abkühlt, die Abgase von dem Zirkondioxid abtrennt, und gegebenenfalls dem erhaltenen Zirkondioxid anhaftende Halogenidreste durch eine Wärmebehandlung mit befeuchteter Luft entfernt.

Das erfindungsgemäße Verfahren zur Herstellung des pyrogen, insbesondere flammenhydrolytisch hergestellten Zirkondioxides weist die folgenden Vorteile auf:

Die gezielte Veränderung der Gasmengenverhältnisse und damit der Flammenparameter, wie zum Beispiel Luftüberschuß, und damit die genaue Einstellung der Parameter des Zirkondioxides ist sehr einfach möglich.

Es entstehen keine Emissionen von chlorhaltigen Gasen, wie zum Beispiel HCl oder Cl₂, da in einem geschlossenen System gearbeitet wird.

Anbackungen des Zirkonoxides in den Leitungen werden vermieden. Aufgrund dessen ist eine kontinuierliche Produktion über lange Zeiträume, zum Beispiel mehrere Tage, ohne daß Reinigungsmaßnahmen ergriffen werden müssen, möglich.

Auch bei dem Eintrag von ZrCl₄ werden erfindungsgemäß Anbackungen vermieden, weil man durch die geschlossene Betriebsweise in dem Apparat zur Verdampfung von ZrCl₄ einen Unterdruck erzeugen kann. Die Gase können dann in die Brennkammer expandieren. Das erfindungsgemäß hergestellte Zirkondioxidpulver kann leicht entsäuert werden, wobei Chloridgehalte von weniger als 0,6 Gew.-% erreicht werden. Aufgrund des überraschend niedrigen Chloridgehaltes kann das erfindungsgemäße Zirkondioxid leicht zur Herstellung von Keramik eingesetzt werden.

Ein weiterer Gegenstand der Erfindung ist die Verwendung des Zirkondioxidpulvers als Ausgangsprodukte zur Herstellung von Keramiken und Keramikvorprodukten, als Füllstoff, in der Elektronikindustrie, als Wärmedämmaterial, als katalytische Substanz, als Trägermaterial für Katalysatoren sowie in der Kosmetikindustrie.

### Beispiele

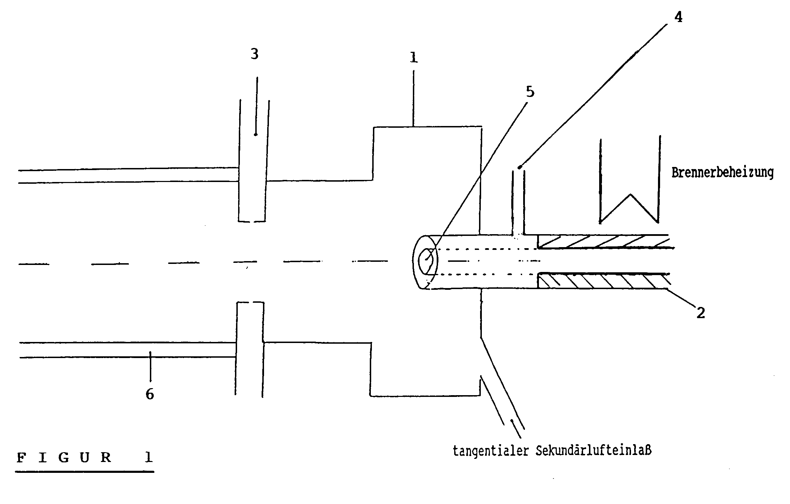

Figur 1 zeigt die schematische Darstellung der Brenneranordnung, die bei dem Verfahren gemäß der Erfindung benutzt wird. In eine Brennerkammer 1 ragt ein Doppelmantelrohr 2. In die Brennerkammer 1 wird tangential Sekundärluft eingeblasen.

Hinter der Brennerkammer 1 befindet sich eine Ringblende 3, aus der zusätzlich Luft eingegeben werden kann, um die Flamme stabilisieren und abkühlen zu können.

Im Innenrohr des Doppelmantelrohres 2 wird das Ausgangsprodukt ZrCl₄-Dampf sowie die "Primärluft" geführt. Wahlweise kann hier auch Wasserstoffgas eingespeist werden.

Nur der letzte Teil des Doppelmantelrohres 2 ist als echter Doppelmantel ausgeführt. In diesen letzten Teil wird mittels einer Ringdüse 4 Wasserstoff der Flamme zugeleitet.

Die Primärluft wird - bevor sie mit ZrCl₄-Dampf vermischt wird - auf Temperaturen von ca. 400 °C aufgeheizt.

Das ZrCl₄ wird in einem geheizten Feststoffverdampfer (Temperatur ca. 530 °C) verdampft. Der Mengenfluß an festem ZrCl₄ wird mittels einer Differentialdosierwaage gemessen und in den geheizten Verdampfer eingetragen.

Aus dem Feststoffverdampfer wird der Zirkonchloriddampf unter Anlegen eines Stickstoffstromes (500 bis 1.500 l/h) in das Innenrohr 5 des Doppelmantelrohres 2 geleitet, wo er sich mit der heißen Primärluft vermischt.

Der für die Flammenhydrolyse notwendige Wasserstoff wird ausschließlich (wahlweise auch vorgeheizt) in den äußeren (letzten) Teil des Ringmantels oder in das Innenrohr 5 des Doppelmantelrohres 2 eingespeist.

Das Doppelmantelrohr 2 ist bis zur Eintrittsstelle des Wasserstoffes geheizt. So ist um das bis zu dieser Stelle als Vollmaterial ausgebildete (äußere) Rohr eine elektrische Heizung gelegt, die dafür sorgt, daß das Gasgemisch im Inneren eine Temperatur von mindestens 380 °C hat.

Die Ausströmgeschwindigkeit der Gase muß über der Zündgeschwindigkeit der Gase, vorzugsweise in einem Bereich von 10 bis 50 m/sec (bezogen auf Normzustand), liegen.

Die Flamme brennt schlauchförmig in das wassergekühlte Flammrohr 6.

Vor dem Flammrohr sitzt eine Ringblende 3, aus der Blendenluft ringförmig nach innen gerichtet ausströmt. Diese Vorrichtung dient der Flammenstabilisierung und der Quenchung der Flamme.

In Tabelle 1 sind verschiedene experimentelle Bedingungen zur Herstellung von pyrogenem Zirkondioxid angegeben.

Nach dem Passieren eines Flammrohres wird das erhaltene Zirkondioxid nach bekannten Verfahren, zum Beispiel in einem Filter oder durch Zyklone, von den salzsäure- oder chlorhaltigen Gasen abgetrennt.

Das Zirkondioxid kann in einem weiteren Schritt durch eine thermische Behandlung von anhaftenden Salzsäureresten befreit werden.

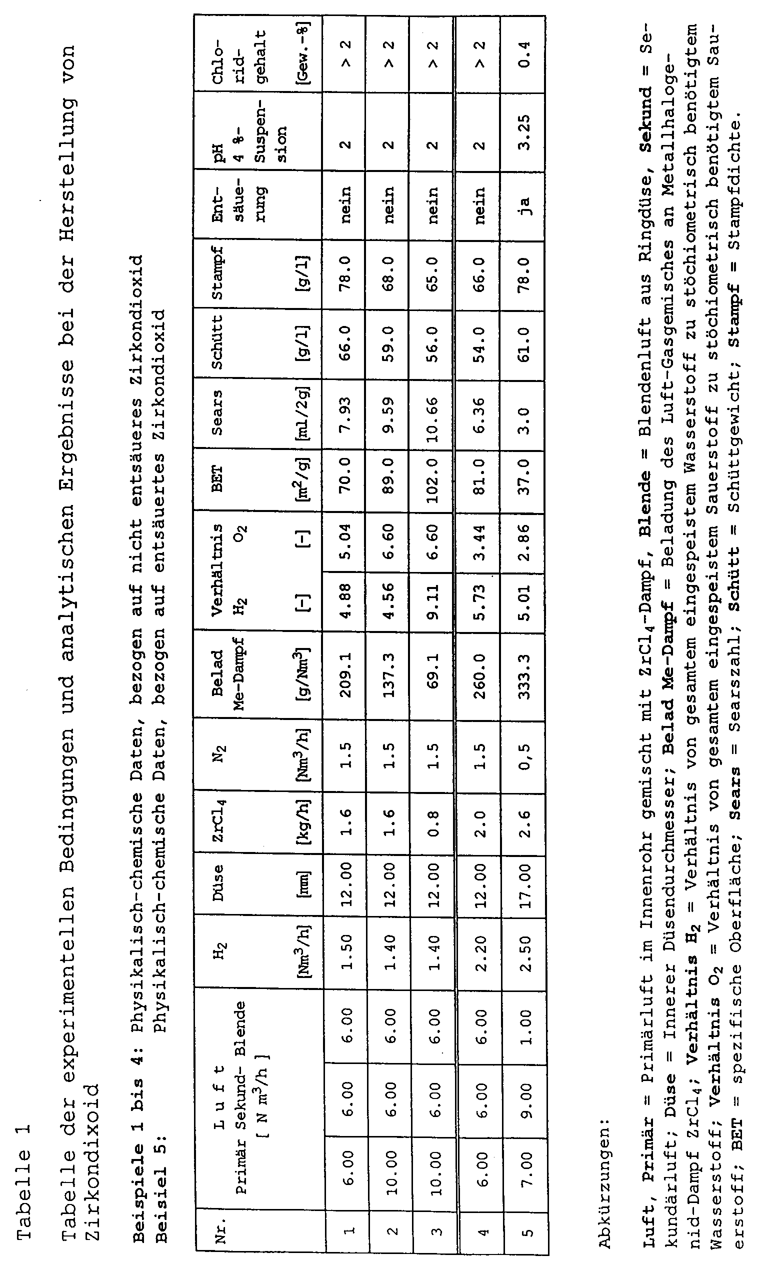

### Bestimmung der Sears-Zahl, titriert von pH 4 nach pH 9

Die Sears-Zahl entspricht dem Verbrauch an 0.1 N NaOH, die benötigt wird, um eine definierte ZrO₂-Suspension von pH 4 auf pH 9 einzustellen.

### Durchführung:

2 g ZrO₂ werden in einem 400 ml Becherglas mit 200 ml einer gesättigten NaCl-Lösung versetzt und anschließend 1 min mit einem trockenen Ultra-Turrax®-Rührer behandelt. Nach dem Durchrühren wird durch kurzes Anschalten des über der Flüssigkeit gehaltenen Rührers der größte Teil der im Rührerkopf noch befindlichen Lösung an die Becherglaswandung geschleudert. Die außen am Rührer hängenden Tropfen werden durch Abstreifen mit einem Becherglas entfernt.Die so vorbreitete Probe wird in ein doppelwandiges Titriergefäß gegeben. Man spült das Becherglas mit 2 bis 3 ml destilliertem Wasser aus und gibt sie noch zur Lösung im Titriergefäß. Es sollte auf keinen Fall mehr Waschwasser verwendet werden, damit das Volumen der Probe konstant bleibt. Zu dieser Suspension gibt man noch weitere 25 g Natriumchlorid hinzu. Durch den Doppelmantel des Titriergefäßes wird Wasser bei 25 °C gepumpt. Bei der nun folgenden eigentlichen Titration wird zunächst in schneller Tropfenfolge und gegen Ende der Titration wesentlich langsamer 0.1 N-Natronlauge zugegeben, bis der pH-Wert von 9 erreicht ist.

Die Sears-Zahl (pH 4 nach pH 9) entspricht dem Verbrauch an 0.1 N NaOH / Einwaage innerhalb dem angegebenen Bereich des pH-Wertes.

In den Beispielen wird der Wasserstoff ausschließlich in den äußeren Ring des Doppelmantelrohres 2 eingespeist.

### Vergleichsbeispiel

Mit der folgenden Einstellung werden ca. 150 Kilogramm pyrogenes Zirkondioxid nach dem bekannten Verfahren (offener Brenner) hergestellt.

| | |
|---|---|
| Verdampferluft: | 4 Nm³/h |
| Mantel H₂: | 1 Nm³/h |
| Träger-N₂: | 0.5 Nm³/h |
| ZrCl₄: | 3 kg/h |
| Spez. Oberfläche (Durchschnitt) des nicht entsäuerten Zirkondioxides: | 69.5 m²/g |

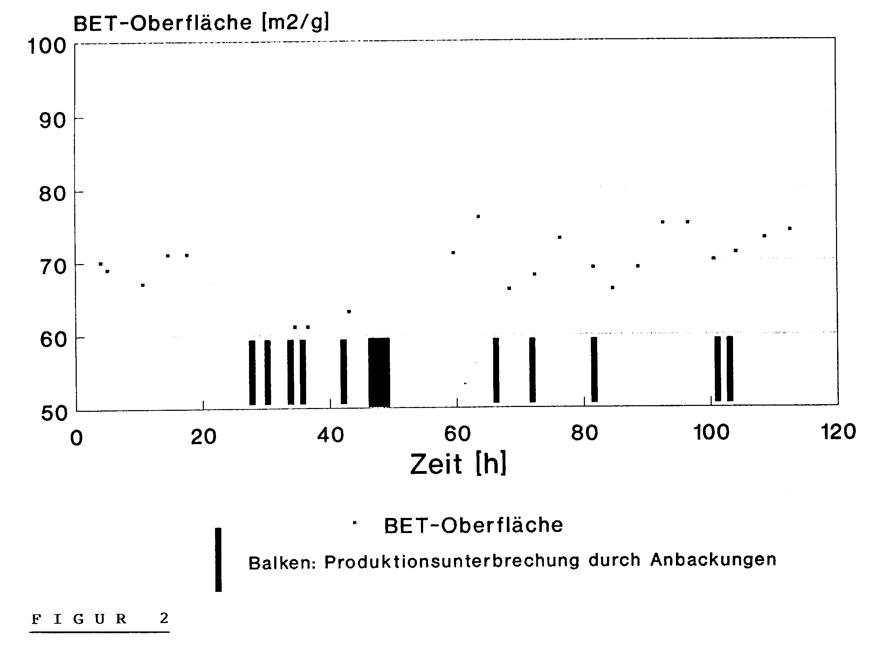

Figur 2 zeigt den zeitlichen Verlauf (und den Verlauf der spezifischen Oberfläche der Produkte) der Kampagne nach dem bekannten Verfahren:

Im Verlaufe von 120 Stunden muß die Herstellung insgesamt 11 mal unbeabsichtigt unterbrochen werden, weil Anbackungen im Flammenbereich und beim Produkteintrag keine Produktion mehr erlauben. Nach jeder Unterbrechung (10 Unterbrechungen bis zu 2 Stunden und eine Unterbrechung über mehr als 5 Stunden) muß die Anlage neu angefahren werden.

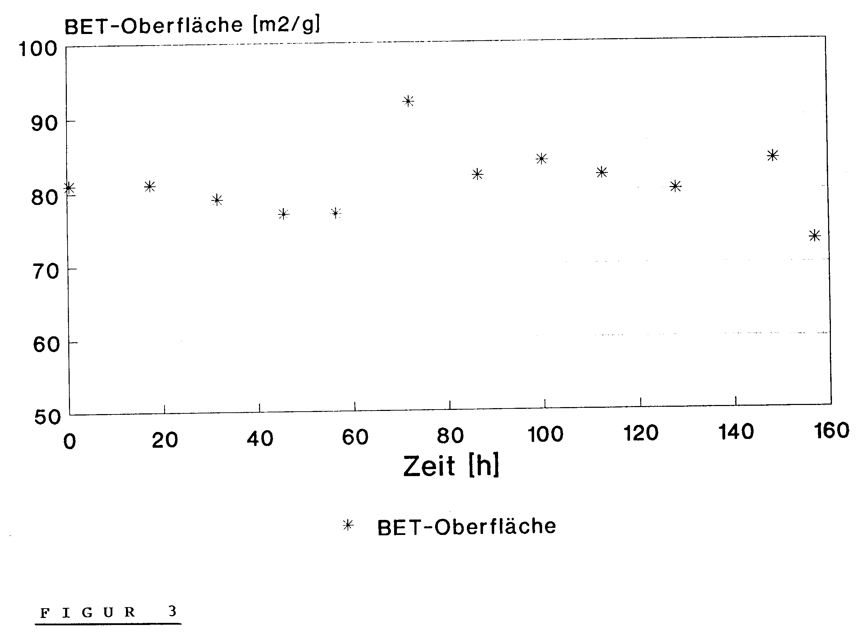

Figur 3 zeigt den zeitlichen Verlauf einer Produktionskampagne nach dem erfindungsgemäßen Verfahren gemäß Beispiel 4. Es werden keine Anbackungen im Flammenbereich und beim Produkteintrag beobachtet. Produktionsunterbrechungen treten nicht auf.

## Patentansprüche

1. Pyrogen, insbesondere flammenhydrolytisch hergestelltes Zirkondioxidpulver, dadurch gekennzeichnet, daß die spezifische Oberfläche der Zirkondioxide zwischen 20 und 200 m²/g liegt, die Primärteilchen, die gegebenenfalls miteinander verwachsen sind, zwischen 7 und 100 nm groß sind, die Stampfdichte der entsäuerten und nicht entsäuerten Zirkondioxide zwischen 40 und 150 g/l liegt, die Searszahlen bestimmt nach der in der Beschreibung angegebenen Methode der entsäuerten und nicht entsäuerten Zirkondioxide zwischen 1 und 20 ml/2g liegt, und der Chlorgehalt der entsäuerten Zirkondioxide kleiner 0,6 Gew.-% ist.

2. Verfahren zur Herstellung eines pyrogen, insbesondere flammenhydrolytisch hergestellten Zirkondioxidpulvers gemäß Anspruch 1, dadurch gekennzeichnet, daß man Zirkonhalogenide verdampft, den Dampf allein oder zusammen mit einem Traggas in einer Mischeinheit in einem Brenner mit Luft, Sauerstoff, Stickstoff und Wasserstoff mischt, die Gase in einer geschlossenen Brennerkammer in einer Flamme miteinander zur Reaktion bringt, anschließend die heißen Abgase und das Zirkondioxid in einer Wärmetauschereinheit abkühlt, die Abgase von dem Zirkondioxid abtrennt und gegebenenfalls an dem erhaltenen Zirkondioxid anhaftende Halogenidreste durch eine Wärmebehandlung mit befeuchteter Luft entfernt.

3. Verwendung des Zirkondioxidpulvers gemäß Anspruch 1 als Ausgangsprodukte zur Herstellung von Keramiken und Keramikvorprodukten, als Füllstoff und in der Elektronikindustrie, als Wärmedämmaterial, als katalytische Substanz, als Trägermaterial für Katalysatoren sowie in der Kosmetikindustrie.

## Claims

1. Zirconium dioxide powder prepared pyrogenically, especially by flame hydrolysis, characterised in that the specific surface of the zirconium dioxides is from 20 to 200 m²/g, the primary particles, which are optionally intergrown with one another, are from 7 to 100 nm in size, the tamped density of the deacidified and non-deacidified zirconium dioxides is from 40 to 150 g/litre, the Sears indices, determined by the method indicated in the description, of the deacidified and non-deacidified zirconium dioxides are from 1 to 20 ml/2g, and the chlorine content of the deacidified zirconium dioxides is less than 0.6 wt.%.

2. Process for the preparation of a zirconium dioxide powder according to claim 1 prepared pyrogenically, especially by flame hydrolysis, characterised in that zirconium halides are vaporised, the vapour is mixed, on its own or together with a supporting gas, with air, oxygen, nitrogen and hydrogen in a mixing unit in a burner, the gases are reacted with one another in a closed burner chamber in a flame, the hot waste gases and the zirconium dioxide are then cooled in a heat exchanger unit, the waste gases are separated from the zirconium dioxide, and any halide residues adhering to the resulting zirconium dioxide are removed by heat treatment with moist air.

3. Use of the zirconium dioxide powder according to claim 1 as starting products for the manufacture of ceramics and ceramics preliminary products, as a filler and in the electronics industry, as a heat-insulating material, as a catalytic substance, as a carrier material for catalysts, and in the cosmetics industry.

## Revendications

1. Poudre de dioxyde de zirconium obtenue par voie pyrogène, en particulier par hydrolyse de flamme, caractérisée en ce que la surface spécifique du dioxyde de zirconium est comprise entre 20 et 200 m²/g, en ce que les particules primaires, qui adhèrent le cas échéant les unes aux autres, ont une taille comprise entre 7 et 100 nm, en ce que la densité tassée du dioxyde de zirconium, libéré et non libéré des acides, est comprise entre 40 et 150 g/l, en ce que les indices de Sears, mesurés selon la méthode indiquée dans la description, du dioxyde de zirconium, libéré et non libéré des acides, sont compris entre 1 et 20 ml/2g et en ce que la teneur en chlore du dioxyde de zirconium libéré des acides est inférieure à 0,6 % en poids.

2. Procédé pour la préparation d'une poudre de dioxyde de zirconium obtenue par voie pyrogène, en particulier par hydrolyse de flamme, selon la revendication 1, caractérisé en ce qu'on évapore de l'halogénure de zirconium, en ce qu'on mélange la vapeur, seule ou avec un gaz entraîneur, dans une unité de mélange dans un brûleur avec de l'air, de l'oxygène, de l'azote et de l'hydrogène, en ce qu'on fait réagir les gaz les uns avec les autres dans une flamme dans une chambre de combustion fermée, en ce qu'on refroidit ensuite les gaz résiduaires chauds et le dioxyde de zirconium dans une unité d'échange de chaleur, en ce qu'on sépare les gaz résiduaires du dioxyde de zirconium et en ce qu'on élimine les restes d'halogénure, qui adhèrent le cas échéant au dioxyde de zirconium obtenu, par un traitement de chaleur avec de l'air humidifié.

3. Utilisation de la poudre de dioxyde de zirconium selon la revendication comme produit de départ pour la fabrication de céramiques et de produits de départ de céramiques, comme charge et dans l'industrie électronique, comme matériau calorifuge, comme substance catalytique, comme matériau support pour des catalyseurs ainsi que dans l'industrie cosmétique.
